# NOUVEAU FASCICULE DE BREVET EUROPEEN

(11) **EP 3 713 795 B2**
(45) Date de publication et mention de la décision concernant l'opposition: **25.02.2026**
(45) Mention de la délivrance du brevet: 15.02.2023
(21) Numéro de dépôt: 18807328.2
(22) Date de dépôt: 23.11.2018
(51) Int. Cl.: B60R 19/48

(54) **SYSTÈME DE FIXATION D'UN CAPTEUR DE DÉTECTION D'OBSTACLES POUR VÉHICULE AUTOMOBILE**
SYSTEM ZUR SICHERUNG EINES HINDERNISERKENNUNGSSENSORS FÜR EIN KRAFTFAHRZEUG
FIXATION SYSTEM OF AN OBSTACLE SENSING DETECTOR FOR AN AUTOMOBILE

(30) Priorité: 24.11.2017 FR 1761138
(43) Date de publication de la demande: 30.09.2020
(73) Titulaire: OPmobility SE, 69007 Lyon (FR)
(72) Inventeur: UTTER, Jérôme, 01150 Sainte-Julie (FR); AOUIAL, Yassine, 01150 Sainte-Julie (FR); DUBOIS, Alain, 01150 Sainte-Julie (FR)
(74) Mandataire: LLR
(86) Numéro de dépôt international: PCT/EP2018/082395
(87) Numéro de publication internationale: WO 2019/101936

(56) Documents cités:
- WO-A1-2017/005448
- DE-A1- 10 337 760

## Description

La présente invention concerne le domaine des véhicules automobiles, et notamment des pièces en matière plastique pour l'industrie automobile. L'invention traite plus précisément d'un système de détection d'obstacle pour des véhicules automobiles.

De tels obstacles peuvent être immobiles, tels que des trottoirs ou des arbres, ou mobiles, tels que des piétons ou des véhicules en mouvement.

On connaît des systèmes de détection, intégrés au sein du véhicule, comportant un capteur de proximité. Un tel capteur a pour fonction de détecter ces obstacles, afin que l'utilisateur soit informé en cas de situations jugées à risque. Chacun de ces capteurs est généralement couplé à un support, lui-même fixé sur la pièce du véhicule.

Ces capteurs sont principalement des capteurs ultrasoniques qui émettent des ondes sonores dont la fréquence est de l'ordre de 40 kHz à 60 kHz. Ces ondes sont réfléchies par les obstacles et retournent ensuite vers le capteur. Ces ondes retours sont détectées par le capteur, et sont ensuite traitées par une unité de traitement, reliée au capteur. Il en est enfin déduit une information quant à la position des obstacles détectés.

Ces systèmes sont généralement fixés sur le pare-chocs, et sont visibles à travers des orifices réalisés dans le pare-chocs, car les ultrasons émis par les capteurs ne peuvent traverser les matières plastiques des pare-chocs. Autrement dit, les constructeurs automobiles sont obligés de prévoir et de réaliser des orifices dans les pare-chocs pour que les capteurs de proximité puissent remplir leur fonction.

Une telle obligation présente un inconvénient du point de vu des processus de fabrication et d'assemblage car les pièces doivent être reprises pour y découper les orifices laissant passer les ondes des capteurs. Cette obligation implique également des adaptations logistiques qui peuvent se révéler coûteuses à mettre en place car un stockage des pièces de carrosserie fabriquées doit être opéré et être suivi d'un acheminement de ces pièces jusqu'au poste de reprise où sont réalisés les orifices.

L'obligation de la présence d'orifices dans ces pièces présente aussi un inconvénient esthétique. En effet, les systèmes demeurent visibles depuis l'extérieur du véhicule. Pour parer à cet inconvénient, il a été envisagé de fabriquer les différents éléments constitutifs des systèmes de détection de sorte que leur surface externe soit d'une couleur identique à celle du pare-chocs. Cependant, cette solution implique une logistique coûteuse, qui tend à le devenir davantage compte tenu des personnalisations de couleurs de plus en plus fréquentes dans l'industrie automobile, par l'utilisateur final.

De plus, même avec une couleur identique, ces systèmes restent visibles pour un utilisateur attentif et averti. Dès lors, l'inconvénient esthétique précédemment mentionné demeure malgré la solution envisagée.

Un autre inconvénient de cette obligation relative aux capteurs et aux orifices qu'il est nécessaire de réaliser, est qu'elle contraint les constructeurs dans leur conception des véhicules. En effet, les véhicules doivent pour des questions de sécurité évidentes, être nécessairement tous pourvus des fonctionnalités de détection des obstacles, afin de garantir la sécurité de leur(s) occupant(s). Il est une préoccupation prioritaire des constructeurs de s'affranchir d'une telle contrainte conceptuelle.

Afin de surmonter les inconvénients mentionnés, il est connu des systèmes dans lesquels des capteurs ultrasoniques sont positionnés derrière une pièce de carrosserie et sont, par conséquent, invisible depuis l'extérieur du véhicule. Cependant une telle intégration complique le nettoyage de ces systèmes « invisibles » par rapport aux systèmes dits visibles qui peuvent eux bénéficier facilement d'un nettoyage manuel ou automatique. En effet, la maintenance nécessaire pour nettoyer ces systèmes invisibles est lourde, car elle implique, compte tenu de l'emplacement et de l'environnement étroit dans lesquels sont placés ces systèmes, d'accéder à ces systèmes et de les démonter avant toute opération de nettoyage. Autrement dit, une telle maintenance en vue du nettoyage de ces systèmes invisibles est très compliquée et nécessite d'être réalisée par des professionnels, en garage.

Or, cette maintenance et les opérations de nettoyage afférentes sont primordiales au bon fonctionnement des systèmes de détection d'obstacles, qu'ils soient visibles ou invisibles. En effet, l'accumulation de saletés sous forme liquide, solide ou gazeuse au sein d'un système, et plus particulièrement devant la surface de détection du capteur, impacte la propagation des ondes et leur détection par le capteur. La détection du capteur peut alors être faussée, ce qui engendre la détection de faux obstacles ou une non détection d'obstacle. Dès lors, de tels systèmes ne sont pas fiables et ne permettent pas de garantir la sécurité de leur(s) occupant(s). Le document DE10337760 montre un système de fixation d'un capteur. Le document DE 10 2008 016 558 A1 divulgue un autre système de fixation d'un capteur comprenant un support sur lequel est monté un boîtier d'un capteur. Ce document ne divulgue pas une trappe ménagée dans le boîtier permettant l'introduction du capteur après montage du boîtier sur le support.

L'invention a pour but de remédier à tous ces inconvénients en fournissant un système de fixation d'un capteur de détection d'obstacles pour une pièce de carrosserie de véhicule automobile selon la revendication 1, le système comprenant :
- un boitier apte à accueillir un capteur de proximité, le boitier présentant une surface de détection ;
- un support comprenant un logement apte à accueillir le boitier, le support étant apte à être fixé sur la pièce de carrosserie, le support étant agencé pour former un volume entre la surface de détection du boitier et la pièce de carrosserie ;
- un organe d'étanchéité apte à étanchéifier le volume entre la surface de détection du boitier et la pièce de carrosserie.

L'invention concerne également un ensemble d'une pièce de carrosserie de véhicule automobile et d'un système de fixation d'un capteur de détection d'obstacles selon l'invention, selon la revendication 9, dans lequel la pièce de carrosserie est en matière plastique, la pièce de carrosserie étant opaque, transparente optiquement ou semi-transparente optiquement.

L'ensemble selon l'invention peut également comprendre ou une plusieurs des caractéristiques suivantes :
- le support de capteur du système est fixé sur une face de la pièce de carrosserie destinée à être invisible depuis l'extérieur du véhicule automobile une fois celui-ci assemblé ;
- la pièce de carrosserie est une peau de pare-chocs, un hayon, une porte, un toit ou un capot.

L'invention sera mieux comprise à la lecture des figures annexées, qui sont fournies à titre d'exemples et ne présentent aucun caractère limitatif, dans lesquelles :
- les figures 1A et 1B sont des schémas illustrant un système selon un premier mode de réalisation de l'invention ;
- les figures 2A et 2B sont des schémas illustrant un système selon un deuxième mode de réalisation de l'invention ;
- les figures 3Aet 3B sont des schémas illustrant un système selon un troisième mode de réalisation de l'invention ;
- les figures 4A et 4B sont des schémas illustrant un système selon un quatrième mode de réalisation de l'invention ;
- les figures 5A et 5B sont des schémas illustrant un système selon un cinquième mode de réalisation de l'invention ;
- les figures 6A et 6B sont des schémas illustrant un système selon un sixième mode de réalisation de l'invention ;
- les figures 7Aet 7B sont des schémas illustrant un système selon un septième mode de réalisation de l'invention ;
- la figure 8 est un schéma illustrant un système selon un huitième mode de réalisation de l'invention ;
- la figure 9 est un schéma illustrant un système selon un neuvième mode de réalisation de l'invention ;
- la figure 10 est un schéma illustrant un système selon un dixième mode de réalisation de l'invention ;
- la figure 11 est un schéma illustrant un système selon un onzième mode de réalisation de l'invention ;
- la figure 12 est un schéma illustrant un système selon un douzième mode de réalisation de l'invention ;
- les figures 13A et 13B sont des schémas illustrant un système selon un treizième mode de réalisation de l'invention.

On va décrire un système de fixation d'un capteur de détection d'obstacles 1 pour une pièce de carrosserie 5 de véhicule automobile et un ensemble 7 d'une pièce de carrosserie 5 de véhicule automobile et d'un système de fixation d'un capteur de détection d'obstacles 1.

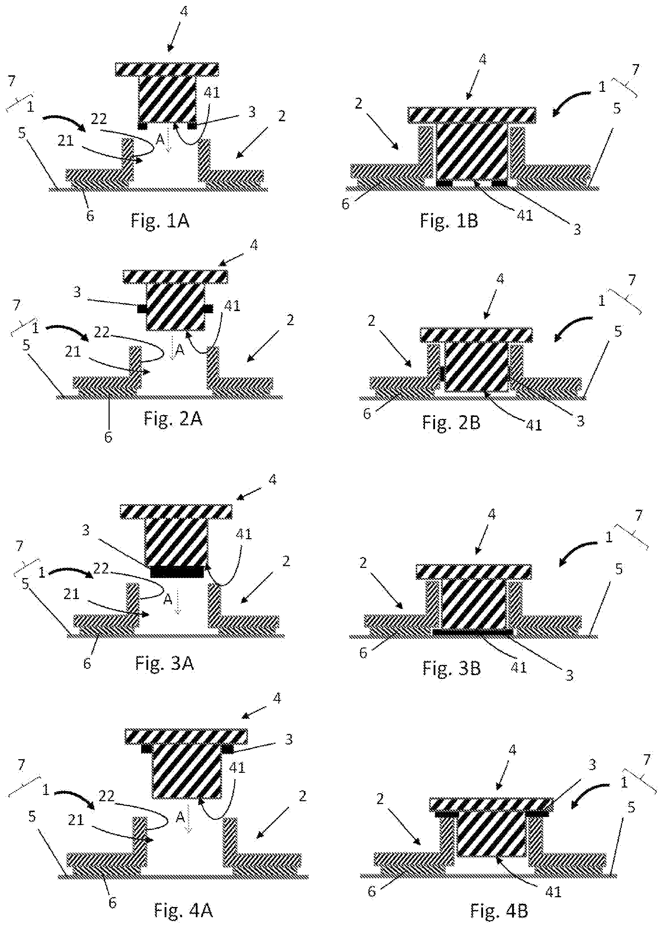

Les différents modes de réalisation du système 1 et de l'ensemble 7, illustrés aux figures 1A à 13B, ont de nombreux éléments en commun, ce qui se traduit par des références identiques pour ces éléments.

Le système de fixation d'un capteur de détection d'obstacle 1 comprend un boitier 4 apte à accueillir un capteur de proximité (non représenté), le boitier 4 présentant une surface de détection 41. Cette surface de détection 41 correspond à la surface en regard avec l'organe de détection du capteur de proximité. Cet organe est apte à émettre et recevoir des ondes à travers la surface de détection 41, afin de détecter la présence d'un obstacle. Cette surface 41 est donc destinée à être située dans le volume étanche en regard de la pièce de carrosserie 5. Le système 1 comprend également un support 2 fixé sur la pièce de carrosserie 5. Le support 2 comprend un logement 21 apte à accueillir le boitier 4, plus précisément au moins une partie du boitier 4, cette partie comprenant la surface de détection 41. Dans les modes de réalisation illustrés, le support 2 est fixé à la pièce de carrosserie 5 par l'intermédiaire d'une couche de colle 6. Tout autre moyen apparaissant adapté à l'homme du métier pour une telle fixation, par exemple un vissage ou une soudure, peut être envisagé dans le cadre de l'invention. Enfin, le système comprend un organe d'étanchéité (3, 30) positionné de sorte à étanchéifier le volume entre la surface de détection 41 du boitier 4 et la pièce de carrosserie 5. De cette façon, le système garantit un volume de détection pour le capteur de proximité positionné dans le boitier 4, au sein duquel aucune pollution impactant la propagation des ondes n'est possible.

Le capteur peut être enlevé et positionné dans un boitier 4 déjà introduit dans le logement 21 du support 2. Pour ce faire, il est possible d'introduire le capteur par l'intermédiaire d'une trappe (non représentée) prévue dans le boitier 4 à cet effet, offrant ainsi la possibilité de changer le capteur lorsque celui-ci ne fonctionne plus ou doit subir des opérations de reprogrammation. Le capteur de proximité peut également être intégré au système 1 en même temps que le boitier 4, ce qui permet d'optimiser la logistique sur une chaine d'assemblage. Le capteur de proximité utilisé pour le système 1 et l'ensemble 7 selon l'invention est un capteur émettant des ondes aptes à traverser la pièce de carrosserie (5), par exemple des ondes électromagnétiques qui résonnent à de hautes fréquences et présentent la capacité de traverser la matière plastique de la pièce de carrosserie 5, sans importance que cette dernière soit une peau de pare-chocs, un hayon, une porte, un toit ou un capot.

Dans les modes de réalisation représentés aux figures 1A à 13B, l'organe d'étanchéité (3, 30) se décline de deux façons.

Premièrement, comme représenté aux figures 1A à 7B, il est réalisé à partir d'un matériau 3 ou d'une combinaison de matériaux 3 choisi parmi la liste constituée de : silicone, mousse à alvéoles fermées, éthylène-propylène-diène monomère (EPDM), colle. De tels matériaux ou combinaisons de matériaux, forment un élément souple 3 qui, lors de l'insertion du boitier 4 dans le logement 21 du support 2, est comprimé et se déforme, ce qui permet l'étanchéification du volume dans lequel est située la surface de détection 41.

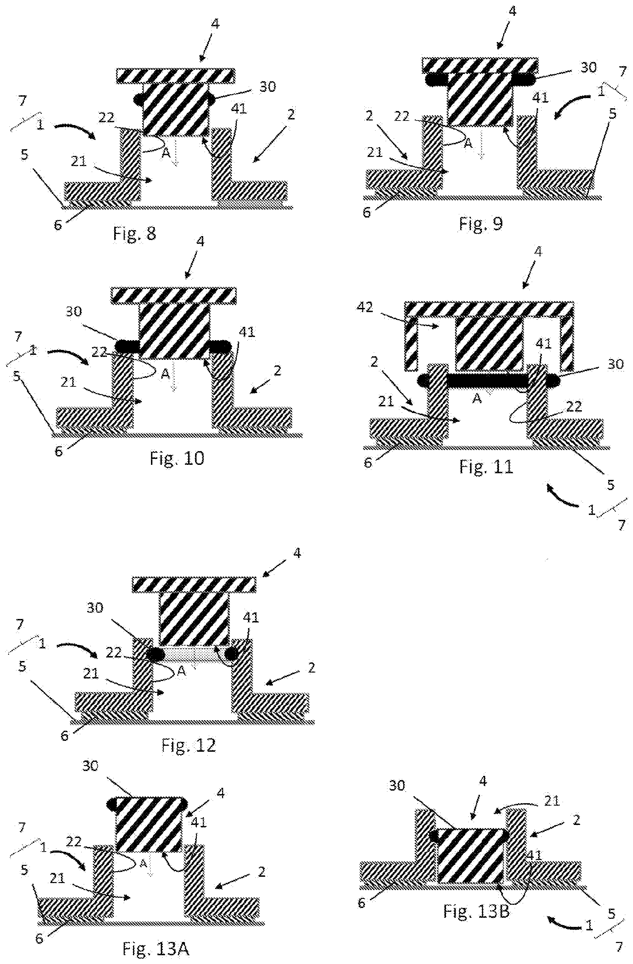

Deuxièmement, comme représenté aux figures 8 à 13B, l'organe d'étanchéité (3, 30) comprend un joint d'étanchéité 30 qui est positionné entre le support 2 et le boitier 4, de sorte à étanchéifier le volume entre la surface de détection 41 du boitier 4 et la pièce de carrosserie 5.

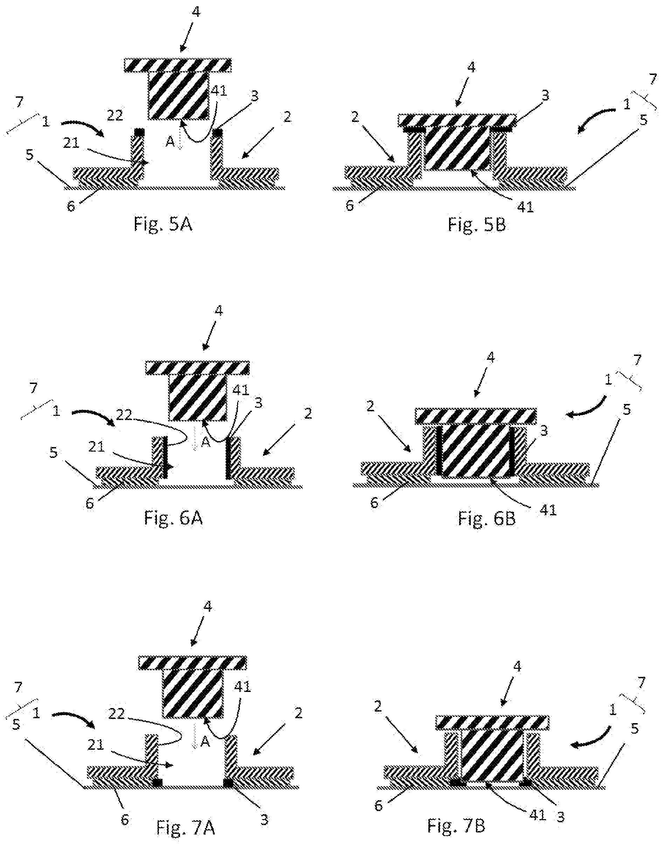

L'organe d'étanchéité (3, 30) peut être rapporté sur le boitier 4 (figures 1A à 4B, 8 et 9), sur le support 2 (figures 5A à 6B et 10 à 13B) ou encore sur la pièce de carrosserie 5 (figures 7A et 7B ), et ce, avant l'assemblage entre le boitier 4 et le support 2. Un tel assemblage est réalisé selon la direction d'assemblage représentée par la flèche A. L'organe d'étanchéité (3, 30) peut être issu de fabrication avec l'élément sur lequel il est rapporté ou alors être fabriqué indépendamment et rapporté sur ce dernier dans une seconde étape.

Plus précisément, le matériaux souple 3 formant l'organe d'étanchéité peut être disposé aux extrémités de la surface de détection 41 (figure 1A et 1B), sur la circonférence du boitier 4 (figures 2A et 2B), sur la périphérie de la surface de détection 41 (figure 3A et 3B) ou encore au niveau des butées du boitier 4 (figures 4A et 4B) destinées à venir contre l'extrémité du logement 21 lors de l'insertion du boitier 4.

Dans les modes de réalisation des figures 1A, 1B, 3A et 3B, l'organe d'étanchéité 3 est comprimé par le boitier 4 directement contre la paroi de la pièce de carrosserie 5.

Dans les modes de réalisation représentés aux figures 2A, 2B et 4A, 4B, l'organe d'étanchéité 3 est comprimé respectivement contre la paroi interne du logement 21 et contre les bords de la paroi extérieure formant l'extrémité supérieure du logement 21. Dans ces deux modes de réalisation les volumes étanches sont supérieurs à ceux des deux premiers modes de réalisation et permettent de ne pas positionner l'organe d'étanchéité sur la surface de détection 41.

Les modes de réalisation représentés aux figures 5A, 5B et 6A, 6B sont les modes de réalisation très proches de ceux respectivement représentées aux figures 4A, 4B et 2A, 2B. Une différence est que l'organe d'étanchéité est rapporté respectivement sur les extrémités supérieures du logement 21 et la paroi interne du logement 21 et non sur le boitier 4. Une seconde différence est que l'organe d'étanchéité du mode de réalisation représenté aux figures 6A et 6B est réparti sur toute la longueur de la paroi interne du logement 21, sécurisant encore davantage l'étanchéité du volume entre la surface de détection 41 et la pièce de carrosserie 5.

L'organe d'étanchéité 3, sous la forme de matériaux souple, peut également être positionné contre les moyens de fixation du support 2 sur la pièce de carrosserie 5, en l'occurrence le cordon de colle 6, de sorte qu'il déborde dans une direction opposée du cordon de colle 6 et puisse être comprimé par le boitier 4, lors de son insertion dans le logement 21.

L'organe d'étanchéité peut également comprendre un joint d'étanchéité 30 réparti directement sur le boitier 4 (figures 8 et 9) ou directement sur le support 2 (figures 10 à 12).

Le joint d'étanchéité 30 peut être rapporté sur le boitier 4, plus précisément autour d'une portion destinée à être introduite dans le logement 21, et est ainsi comprimé contre la paroi interne du logement 21, lors de l'insertion en force du boitier 4 (figure 8). Le joint d'étanchéité 30 peut également être réparti autour d'une portion du boitier 4 qui n'est pas destinée à être introduite dans le logement 21. Dès lors, le joint d'étanchéité 30 est comprimé par le boitier 4 contre l'extrémité du logement 21 opposée à la pièce de carrosserie 5, et garantit ainsi l'étanchéité d'un volume plus important (figure 9).

Alternativement au dernier mode de réalisation présenté, le joint d'étanchéité 30 peut directement être positionné contre l'extrémité du logement 21 et est comprimé, par la suite, par le boitier 4 (figure 10) pour un résultat final identique.

Le joint d'étanchéité 30 peut également être réparti autour de la paroi extérieure du logement 21 et être comprimé contre cette dernière par le biais d'une gorge d'emboitement 42 du boitier 4 avec le logement 21. Il est à noter que tous les boitiers des autres modes de réalisation de l'invention peuvent être pourvus de cette gorge d'emboitement 42, même lorsque l'organe d'étanchéité (3, 30) ne nécessite pas une compression par la gorge d'emboitement 42. En effet, cette gorge d'emboitement permet en outre un assemblage plus simple et sécurisé entre le boitier 4 et le support 2, notamment grâce à des moyens d'assemblage non représentés, tels que des clips, des nervures déformables, des associations de gorges circulaires et d'ailettes d'emboitement, *etc.*

Enfin, le joint d'étanchéité 30 peut également être disposé dans une gorge formée au sein de la paroi interne du logement 21, afin d'être comprimé par le boitier 4, une fois celui-ci introduit dans le logement 21 (figure 12). Cette solution permet le bon positionnement et le maintien dans cette position du joint d'étanchéité 30, lors de l'assemblage du boitier 4. Bien évidemment, une telle solution peut être appliquée pour un organe d'étanchéité tel que celui des premiers modes de réalisation présentés.

Par ailleurs dans le mode de réalisation de la figure 13, le joint d'étanchéité 30, disposé au sein de la paroi interne du logement 21 représente la partie supérieure du boitier 4. Dans ce mode de réalisation, l'intégralité du boitier 4 est ainsi logé dans le logement 21 du support 2, ce qui permet de rendre le système 1 encore plus compact et facilite ainsi son intégration d'environnements encore plus restreints.

On réalise l'ensemble 7 comme suit. On fixe le support 2 sur une paroi de la pièce de carrosserie 5 destinée à être invisible depuis l'extérieur du véhicule automobile une fois celui-ci assemblé. Pour ce faire, on utilise tout moyen de fixation adapté pour fournir une fixation sécurisée. Dans les modes de réalisation illustrés, cette fixation est réalisée grâce à un cordon de colle 6. Ensuite, on positionne l'organe d'étanchéité (3, 30). Dans le cas où ce dernier est issu de fabrication avec le support 2 ou le boitier 4, on passe directement à l'étape d'introduction du boitier 4 dans le logement 21 du support 2, dans le but de former un volume étanche entre la surface de détection 41 du boitier et la pièce de carrosserie 5. Si le capteur de proximité n'est pas déjà présent dans le boitier 4 avant l'étape d'introduction précédemment citée, on l'insère dans le boitier 4.

### Liste des références

- 1 :: système de fixation d'un capteur de détection d'obstacles
- 2 :: support
- 3 :: organe d'étanchéité
- 4 :: boitier
- 5 :: pièce de carrosserie de véhicule automobile
- 6 :: colle
- 7 :: ensemble d'un système de fixation d'un capteur de détection d'obstacles 1 et d'une pièce de carrosserie de véhicule automobile 5
- 21 :: logement du support 2
- 22 :: paroi du logement 21
- 30 :: joint d'étanchéité
- 41 :: surface de détection du boitier 4
- 42 :: gorge d'engagement du boitier 4
- A :: direction d'assemblage du boitier 4 dans le logement 21 du support 2

## Revendications

1. Système de fixation d'un capteur de détection d'obstacles (1) pour une pièce de carrosserie (5) de véhicule automobile, le système (1) comprenant :
- un boitier (4) apte à accueillir un capteur de proximité, le boitier (4) présentant une surface de détection (41) ;
- un support (2) comprenant un logement (21) apte à accueillir le boitier (4), le support (2) étant apte à être fixé sur la pièce de carrosserie (5), le support (2) étant agencé pour former un volume entre la surface de détection (41) du boitier (4) et la pièce de carrosserie (5), le boitier étant apte à accueillir un capteur après avoir été monté sur le support par l'intermédiaire d'une trappe ménagée dans le boîtier ;
- un organe d'étanchéité (3 ; 30) apte à étanchéifier le volume entre la surface de détection (41) du boitier (4) et la pièce de carrosserie (5).

2. Système (1) selon la revendication 1, dans lequel l'organe d'étanchéité (3) est réalisé à partir d'un matériau (3) ou d'une combinaison de matériaux choisi parmi la liste constituée de : silicone, mousse à alvéoles fermées, éthylène-propylène-diène monomère (EPDM), colle.

3. Système (1) selon la revendication 1, dans lequel l'organe d'étanchéité (30) comprend un joint d'étanchéité (30).

4. Système (1) selon l'une quelconque des revendications précédentes, dans lequel l'organe d'étanchéité (3 ; 30) est rapporté sur le boitier (4) ou sur le support (2), avant l'assemblage entre le boitier (4) et le support (2).

5. Système (1) selon l'une quelconque des revendications précédentes, dans lequel le logement (21) du support (2) comprend une gorge apte à recevoir l'organe d'étanchéité (3 ; 30).

6. Système (1) selon l'une quelconque des revendications précédentes, dans lequel le boitier (4) comprend une gorge d'engagement (42) avec le logement (21) du support (2).

7. Système (1) selon l'une quelconque des revendications précédentes, comprenant en outre un capteur de proximité accueilli dans le boitier (4), le capteur émettant des ondes aptes à traverser la pièce de carrosserie (5).

8. Système (1) selon la revendication 7, dans lequel le capteur est un capteur radar, un capteur optique, un capteur infrarouge ou un capteur Térahertz.

9. Ensemble (7) d'une pièce de carrosserie (5) de véhicule automobile et d'un système (1) selon l'une quelconques des revendications précédentes, dans lequel la pièce de carrosserie (5) est en matière plastique, la pièce de carrosserie (5) étant opaque, transparente optiquement ou semi-transparente optiquement.

10. Ensemble (7) selon la revendication précédente, dans lequel le support (2) du système (1) est fixé sur une face de la pièce de carrosserie (5) destinée à être invisible depuis l'extérieur du véhicule automobile une fois celui-ci assemblé.

11. Ensemble (7) selon la revendication 9 ou 10, dans lequel la pièce de carrosserie (5) est une peau de pare-chocs, un hayon, une porte, un toit ou un capot.

## Patentansprüche

1. System zur Befestigung eines Hindernisdetektionssensors (1) für ein Karosserieteil (5) eines Kraftfahrzeugs, wobei das System (1) aufweist:
- ein Gehäuse (4), das zur Aufnahme eines Näherungssensors geeignet ist, wobei das Gehäuse eine Detektionsoberfläche (41) aufweist;
- einen Träger (2), der eine Aufnahme (21) aufweist, die zur Aufnahme des Gehäuses (4) eingerichtet ist, wobei der Träger (2) zur Befestigung an dem Karosserieteil (5) eingerichtet ist, wobei der Träger (2) so angeordnet ist, dass er ein Volumen zwischen der Detektionsoberfläche (41) des Gehäuses (4) und dem Karosserieteil (5) bildet, wobei das Gehäuse ausgebildet ist, nach der Montage auf der Halterung über eine im Gehäuse vorgesehene Klappe einen Sensor aufzunehmen;
- ein Abdichtungsorgan (3; 30), das dazu geeignet ist, das Volumen zwischen der Detektionsoberfläche (41) des Gehäuses (4) und dem Karosserieteil (5) abzudichten.

2. System (1) nach Anspruch 1, wobei das Abdichtungsorgan (3) aus einem Material (3) oder aus einer Kombination von Materialien realisiert ist, ausgewählt aus der Liste, bestehend aus: Silikon, geschlossenzelliger Schaum, Ethylen-Propylen-Dien (EPDM), Klebstoff.

3. System (1) nach Anspruch 1, wobei das Abdichtungsorgan (30) ein Dichtungselement (30) umfasst.

4. System (1) nach einem der vorhergehenden Ansprüche, wobei das Abdichtungsorgan (3; 30) an dem Gehäuse (4) oder an dem Träger (2) vor der Montage zwischen dem Gehäuse (4) und dem Träger (2) angebracht ist.

5. System (1) nach einem der vorhergehenden Ansprüche, wobei die Aufnahme (21) des Trägers (2) eine Nut aufweist, die zur Aufnahme des Abdichtungsorgans (3; 30) eingerichtet ist.

6. System (1) nach einem der vorhergehenden Ansprüche, wobei das Gehäuse (4) eine Nut (42) zum Eingriff mit der Aufnahme (21) des Trägers (2) aufweist.

7. System (1) nach einem der vorhergehenden Ansprüche, ferner aufweisend einen Näherungssensor, der in dem Gehäuse (4) aufgenommen ist, wobei der Sensor Wellen aussendet, die eingerichtet sind, um das Karosserieteil (5) zu durchqueren.

8. System (1) nach Anspruch 7, wobei der Sensor ein Radarsensor, ein optischer Sensor, ein Infrarotsensor oder ein Terahertz-Sensor ist.

9. Anordnung (7) aus einem Karosserieteil (5) eines Kraftfahrzeugs und einem System (1) nach einem der vorhergehenden Ansprüche, wobei das Karosserieteil (5) aus Kunststoff ist, wobei das Karosserieteil (5) opak, optisch transparent oder optisch halbtransparent ist.

10. Anordnung (7) nach dem vorhergehenden Anspruch, wobei der Träger (2) des Systems (1) an einer Fläche des Karosserieteils (5) befestigt ist, die dazu bestimmt ist, von außerhalb des Kraftfahrzeug nicht sichtbar zu sein, sobald es montiert ist.

11. Anordnung (7) nach Anspruch 9 oder 10, wobei das Karosserieteil (5) eine Stoßfängerhaut, eine Heckklappe, eine Tür, ein Dach oder eine Motorhaube ist.

## Claims

1. System for attaching an obstacle detection sensor (1) for a body part (5) of a motor vehicle, the system (1) comprising:
- a case (4) capable of accommodating a proximity sensor, the case (4) having a detection surface (41);
- a support (2) comprising a housing (21) capable of accommodating the case (4), the support (2) being capable of being attached on the body part (5), the support (2) being arranged to form a volume between the detection surface (41) of the case (4) and the body part (5); the case being capable of hosting a sensor after having been mounted on the support via a hatch arranged in the case;
- a sealing device (3; 30) capable of sealing the volume between the detection surface (41) of the case (4) and the body part (5).

2. System (1) according to claim 1, wherein the sealing device (3) is made from a material (3) or a combination of materials selected from the list consisting of: silicone, closed-cell foam, ethylene-propylene-diene monomer (EPDM), glue.

3. System (1) according to claim 1, wherein the sealing device (30) comprises a gasket (30).

4. System (1) according to any one of the preceding claims, wherein the sealing device (3; 30) is placed on the case (4) or on the support (2), before assembly between the case (4) and the support (2).

5. System (1) according to any one of the preceding claims, wherein the housing (21) of the support (2) comprises a groove capable of receiving the sealing device (3; 30).

6. System (1) according to any one of the preceding claims, wherein the case (4) comprises an engagement groove (42) with the housing (21) of the support (2).

7. System (1) according to any one of the preceding claims, further comprising a proximity sensor housed in the case (4), the sensor emitting waves capable of passing through the body part (5).

8. System (1) according to claim 7, wherein the sensor is a radar sensor, an optical sensor, an infrared sensor or a Terahertz sensor.

9. Assembly (7) of a body part (5) of a motor vehicle and a system (1) according to any one of the preceding claims, wherein the body part (5) is made of plastic, the body part (5) being opaque, optically transparent or optically semi-transparent.

10. Assembly (7) according to the preceding claim, wherein the support (2) of the system (1) is attached on one side of the body part (5) intended to be invisible from the outside of the motor vehicle once it is assembled.

11. Assembly (7) according to claim 9 or 10, wherein the body part (5) is a bumper skin, a tailgate, a door, a roof or a hood.
